# EUROPÄISCHE PATENTSCHRIFT

(11) **EP 1 839 921 B1**
(45) Veröffentlichungstag und Bekanntmachung des Hinweises auf die Patenterteilung: **01.10.2008**
(21) Anmeldenummer: 07005198.2
(22) Anmeldetag: 13.03.2007
(51) Int. Cl.: B60H 1/22

(54) **Fahrzeugheizgerät**
Vehicle heating device
Appareil de chauffage pour véhicule

(30) Priorität: 21.03.2006 DE 102006012925
(43) Veröffentlichungstag der Anmeldung: 03.10.2007
(73) Patentinhaber: J. Eberspächer GmbH & Co. KG, 73730 Esslingen (DE)
(72) Erfinder: Bauer, Thomas, 72581 Dettingen (DE)
(74) Vertreter: Ruttensperger, Bernhard

(56) Entgegenhaltungen:
- WO-A-02/066273
- DE-A1- 10 058 794
- DE-C1- 19 800 241

## Beschreibung

Die vorliegende Erfindung betrifft ein Fahrzeugheizgerät, umfassend einen Brennkammerbereich, einen von einem Gebläsebereich zu einem Brennkammerbereich führenden Verbrennungsluftströmungsweg und einen von dem Brennkammerbereich zu einem Abgasauslass führenden Abgasströmungsweg.

Die in Kraftfahrzeugen beispielsweise als Zuheizer oder Standheizungen eingesetzten Heizgeräte müssen im Allgemeinen so aufgebaut sein, dass sie in die beispielsweise im Motorraum vorhandenen sehr beengten Platzverhältnisse eingegliedert werden können. Dies bedingt, dass die verschiedenen Komponenten dieser Fahrzeugheizgeräte sehr nahe beieinander liegen. Um derartige Fahrzeugheizgeräte dann auch noch für unterschiedliche Fahrzeugtypen geeignet zu machen bzw. in einfacher Art und Weise Fahrzeugheizgeräte mit unterschiedlichen Heizcharakteristiken oder maximalen Heizleistungen bereitstellen zu können, wird häufig ein modulartiger Aufbau gewählt, so dass verschiedene Typen der Fahrzeugheizgeräte sich oftmals nur durch spezielle Baugruppen unterscheiden. Dies führt dazu, dass für die Verbrennungsluft und die Verbrennungsabgase die Strömungswege bei grundsätzlich gleich konzeptionierten, sich in einigen Baugruppen aber unterscheidenden Heizgerätetypen verschieden sind, mit der Folge, dass bedingt durch die unterschiedlichen Strömungsverhältnisse sich teilweise auch unterschiedliche Verbrennungscharakteristiken einstellen. Auch können aufgrund dieser Gegebenheiten unterschiedliche akustische Eigenschaften hervortreten.

WO 02/066 273 offenbart ein Fahrzeugheizgerät gemäß dem Oberbegriff des Anspruchs 1.

Es ist das Ziel der vorliegenden Erfindung, ein Fahrzeugheizgerät bereitzustellen, bei welchem in einfacher Art und Weise definiert auf die Strömungsverhältnisse eingewirkt werden kann.

Erfindungsgemäß wird diese Aufgabe gelöst durch ein Fahrzeugheizgerät, umfassend einen Brennkammerbereich, einen von einem Gebläsebereich zu dem Brennkammerbereich führenden Verbrennungsluft-Strömungsweg und einen von dem Brennkammerbereich zu einem Abgasauslas führenden Abgasströmungsweg, wobei Teile des Verbrennungsluft-Strömungswegs oder/und des Abgas-Strömungswegs in verschiedenen Gehäuseabschnitten gebildet sind und im Angrenzungsbereich diese Gehäuseabschnitte Durchtrittsbereiche für Verbrennungsluft bzw. Abgase vorgesehen sind, ferner umfassend wenigstens ein zwischen den Gehäuseabschnitten angeordnetes Dichtungselement, wobei das wenigstens eine Dichtungselement wenigstens einen Durchtrittsbereich teilweise gegen Durchströmung blockiert.

Bei dem erfindungsgemäßen Fahrzeugheizgerät kann also das zwischen verschiedenen Gehäuseabschnitten angeordnete Dichtungselement dazu genutzt werden, definiert auf die Strömungsverhältnisse einzuwirken, so dass Teilbereiche der verschiedenen Strömungswege freigegeben bzw. gegen Durchströmung blockiert werden können. Dies kann dazu genutzt werden, bei grundsätzlich gleich konzeptionierten, beispielsweise durch den Aufbau des Brennkammerbereichs oder des Gebläsebereichs sich unterscheidenden Fahrzeugheizgeräten insgesamt nahezu gleiche Betriebscharakteristiken zu generieren. Vor allem durch Einwirkung auf den Verbrennungsluft-Strömungsweg wird es möglich, die Charakteristik der im Brennkammerbereich ablaufenden Verbrennung zu beeinflussen.

Beispielsweise kann vorgesehen sein, dass ein Verbrennungsluft-Durchtrittsbereich im Wesentlichen ringartig ausgebildet ist und dass das wenigstens eine Dichtungselement wenigstens einen Ringabschnitt des Verbrennungsluft-Durchtrittsbereichs wenigstens teilweise blockiert. Hier wird also durch die Auswahl der Größe eines blockierten Ringabschnitts bzw. der Anzahl an blockierten Ringabschnitten bzw. deren Lage innerhalb des Gesamtrings ein Einfluss darauf genommen, in welchem Bereich das Anströmen des Brennkammerbereichs mit Verbrennungsluft bevorzugt freigegeben ist bzw. blockiert ist.

Weiterhin kann vorgesehen sein, dass ein Abgas-Durchtrittsbereich eine Mehrzahl von Durchtrittsöffnungen umfasst und dass das wenigstens eine Dichtungselement wenigstens eine der Durchtrittsöffnungen wenigstens teilweise blockiert.

Bei einer aufgrund des sehr einfachen Aufbaus besonders bevorzugten Ausgestaltungsform kann vorgesehen sein, dass ein Dichtungselement zwischen den Gehäuseabschnitten angeordnet ist und dass das eine Dichtungselement einen Verbrennungsluft-Durchtrittsbereich oder/und einen Abgas-Durchtrittsbereich teilweise blockiert.

Das erfindungsgemäße Fahrzeugheizgerät kann so aufgebaut sein, dass der Verbrennungsluft-Strömungsweg in einem ersten Gehäuseabschnitt eine Verbrennungsluft von einem Verbrennungsluftgebläse aufnehmende Kammer umfasst und in einem zweiten Gehäuseabschnitt einen zwischen einem Brennkammergehäuse und einer diese umgebenden Wandung gebildeten Ringkanal umfasst und dass ein Verbrennungsluft-Durchtrittsbereich im Angrenzungsbereich der Kammer an den Ringkanal gebildet ist. Dabei ist es dann weiter möglich, dass der Abgas-Strömungsweg in dem zweiten Gehäuseabschnitt einen zwischen einem Flammrohr und einem Wärmetauschergehäuse gebildeten Ringraum umfasst, der in einem Endbereich durch eine Wandung begrenzt ist, in welcher wenigstens eine Durchtrittsöffnung vorgesehen ist, und dass in dem ersten Gehäuseabschitt eine an die Wandung angrenzende, ringabschnittartig ausgebildete Aufnahmekammer vorgesehen ist, wobei der Abgas-Durchlassbereich im Übergang von dem Ringraum zu der Aufnahmekammer die wenigstens eine Durchtrittsöffnung umfasst.

Die vorliegende Erfindung wird nachfolgend mit Bezug auf die beiliegenden Zeichnungen detailliert beschrieben. Es zeigt:
- Fig. 1: eine Längsschnittansicht eines Fahrzeugheizgeräts;
- Fig. 2: eine Ansicht eines bei dem in Fig. 1 dargestellten Heizgerät eingesetzten Dichtungselements;
- Fig. 3: eine Teil-Schnittdarstellung des in Fig. 1 gezeigten Fahrzeugheizgeräts, geschnitten längs einer Linie III-III in Fig. 1.

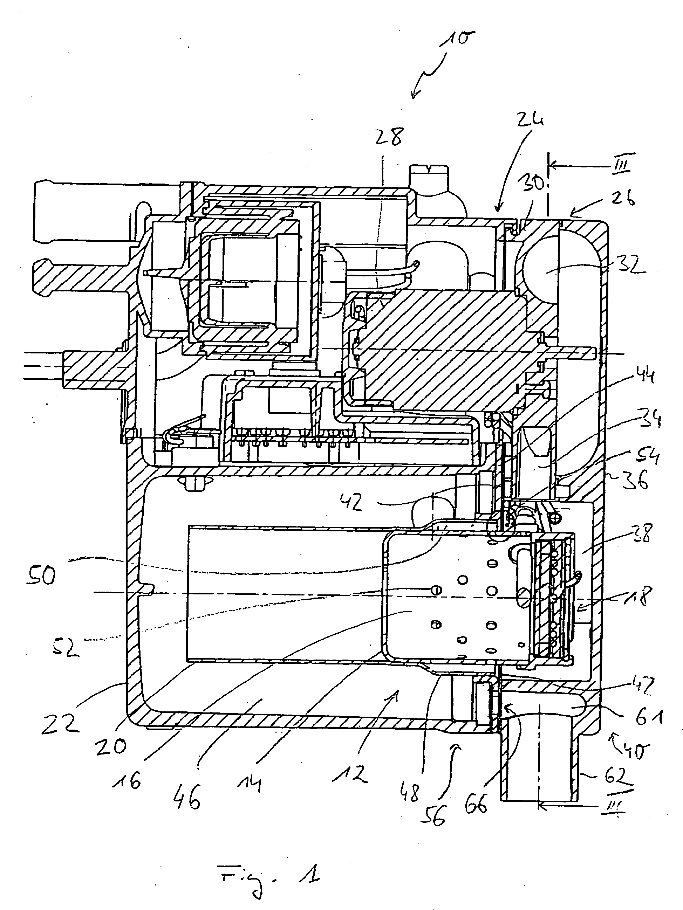

In Fig. 1 ist ein Fahrzeugheizgerät allgemein mit 10 bezeichnet. Dieses Fahrzeugheizgerät 10 ist in sehr kompakter Bauweise aufgebaut und umfasst im Prinzip alle Module, die für die volle Funktionsfähigkeit erforderlich sind. So ist ein allgemein mit dem Bezugszeichen 12 bezeichneter Brennkammerbereich vorhanden, der in einem Brennkammergehäuse 14 eine Brennkammer 16 aufweist. In diese Brennkammer 16 wird über eine Bodenverdampferbaugruppe 18 zunächst in flüssiger Form zugeführter, dann in einem porösen Verdampfermedium aufgenommener und durch Erwärmung in Dampfform in Richtung Brennkammer abgegebener Brennstoff eingespeist. Das Brennkammergehäuse 14 ist in Verbindung mit einem Flammrohr 20, durch welches hindurch die Verbrennungsabgase aus dem Brennkammergehäuse 14 austreten. Das Flammrohr 20 selbst wiederum ist umgeben von einem als Wärmetauschergehäuse zu bezeichnenden Gehäuse 22, das Wärme von den Verbrennungsprodukten aufnimmt und in Richtung zu einem zu erwärmenden Medium, beispielsweise Wasser, abgibt.

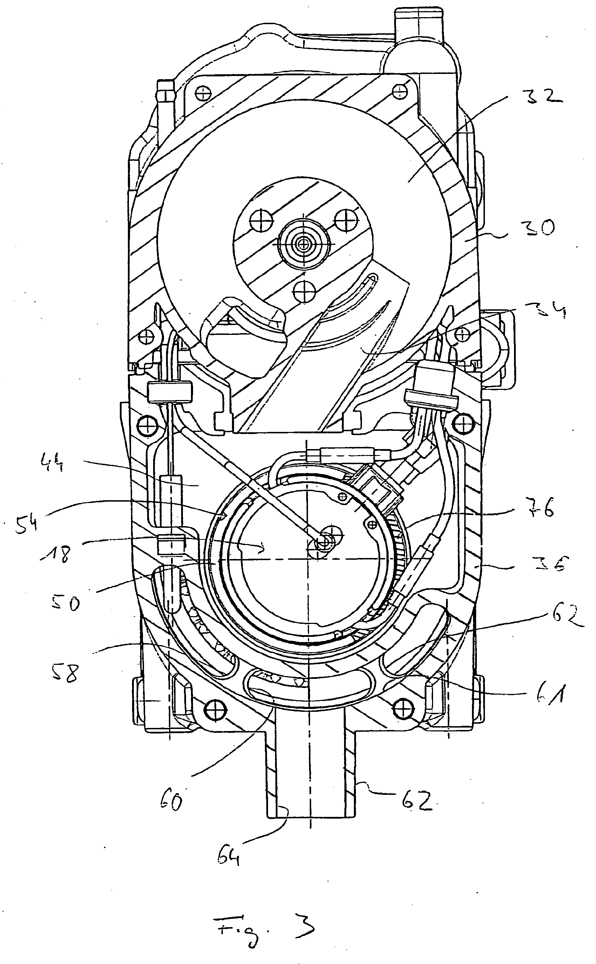

Ein Gebläsebereich 24 umfasst ein Seitenkanalgebläse 26 mit einem Gebläsemotor 28 und einem nicht dargestellten, durch diesen zur Drehung angetriebenen Förderrad. In einem Kanalgehäuse 30 ist ein in Fig. 3 auch erkennbarer ringartiger Förderkanal 32 ausgebildet, aus welchem die durch die Rotation des nicht dargestellten Förderrads geförderte Luft über einem Austrittskanal 34 in Richtung zum Brennkammerbereich 12 austritt. Ein Abdeckgehäuse 36 überdeckt das Kanalgehäuse 30 und das über diesem rotierende Förderrad und überdeckt ferner den rückwärtigen Bereich des Brennkammerbereichs 12, im Wesentlichen also die Bodenverdampferbaugruppe 18. Insbesondere weist in diesem Bereich das Gehäuse 36 eine Kammer 38 auf, in welche der Brennkammerbereich 12 mit seinem rückwärtigen Bereich hineinläuft und in welche auch über den Kanal 34 die vom Seitenkanalgebläse 26 geförderte Luft eintritt. Der die beiden Gehäuseteile 30 und 36 umfassende Gehäuseabschnitt 40 liegt über ein Dichtungselement 42 an einer Gehäusewandung 44 an. Diese Gehäusewandung 44 ist weiterhin in Verbindung mit dem Wärmetauschergehäuse 22 und schließt einen zwischen dessen Innenumfangsfläche und der Außenumfangsfläche des Flammrohrs 20 gebildeten Ringraum 46 axial ab. In ihrem dem Brennkammerbereich 12 nahen Bereich weist die Gehäusewandung 44 einen axial abgebogenen Ansatz auf, in welchen ein das Flammrohr 20 verlängernder Wandungsabschnitt 48 eingreift und dort damit beispielsweise durch Verlötung oder durch Presspassung fest bzw. gasdicht verbunden ist. Der Wandungsabschnitt 48 weist einen Abstand zur Außenoberfläche des Brennkammergehäuses 14 auf, so dass ein Ringkanal 50 gebildet ist, der über eine Vielzahl von Öffnungen 52 in Verbindung mit der im Brennkammergehäuse 14 gebildeten Brennkammer 16 steht. Dieser Ringkanal 50 ist am Endbereich des Wandungsabschnitts 48 offen und liegt der im Gehäuse 36 bzw. dem Gehäuseabschnitt 40 gebildeten Kammer 38 gegenüber. In dem Bereich, in dem die Kammer 38 und der Ringkanal 50 sich gegenüberliegen, ist ein Durchtrittsbereich 54 für die vom Gebläsebereich 24 geförderte Verbrennungsluft gebildet, wobei dieser Durchtrittsbereich 54, sowie die Geometrie des Ringkanals 50 dies vorgibt, im Wesentlichen ringartig ausgebildet ist.

Man erkennt also aus der vorangehenden Beschreibung, dass der Strömungsweg der Verbrennungsluft von dem Seitenkanalgebläse 26 bis zur Brennkammer 16 zum Teil im ersten Gehäuseabschnitt 40 gebildet ist, nämlich dadurch, dass die Verbrennungsluft über den Kanal 34 in die Kammer 38 strömt, und zum Teil in einem zweiten Gehäuseabschnitt 56 gebildet ist, der im Wesentlichen den Wandungsabschnitt 48, die Gehäusewandung 44 und ggf. auch noch das Wärmetauschergehäuse 22 umfassen kann.

Auch für die aus der Brennkammer 16 austretenden Verbrennungsabgase ist ein Strömungsweg definiert, der im Wesentlichen in diesen beiden Gehäuseabschnitten 40 und 56 verläuft. Diese Verbrennungsabgase strömen, nachdem sie aus dem Flammrohr 20 ausgetreten sind, durch den Ringraum 46 in Richtung auf die Gehäusewandung 44 zu. Diese weist, wie in der Fig. 3 erkennbar, drei Durchtrittsöffnungen 58, 60, 62 auf, welchen in Strömungsrichtung eine Aufnahmekammer 61 im Gehäuse 36 gegenüberliegt. Am Gehäuse 36 ist ferner ein Abgasauslassstutzen 62 vorgesehen, der eine in die Aufnahmekammer 61 mündende zentrale Öffnung 64 aufweist. Auch für den Strömungsweg der Verbrennungsabgase ist also ein Durchtrittsbereich 66 im Übergang zwischen den beiden Gehäuseabschnitten 56, 40 definiert, wobei dieser Durchtrittsbereich im Wesentlichen die drei Durchtrittsöffnungen 58, 60, 62 umfasst.

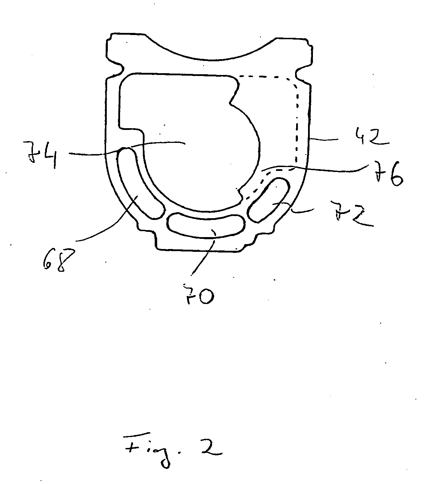

Das zwischen den beiden Gehäuseabschnitten 40, 56, also im Wesentlichen den Gehäusen 30 und 36 einerseits und der Gehäusewandung 44 andererseits liegende Dichtungselement 42 ist in Fig. 2 dargestellt. Die Außenumfangskontur dieses Dichtungselements 42 ist grundsätzlich an die in Fig. 3 auch erkennbare Außenumfangskontur des Heizgeräts 10 in demjenigen Bereich, wo dieses Dichtungselement 42 angeordnet ist, angepasst. Man erkennt in Zuordnung zu den drei Durchtrittsöffnungen 58, 60, 62 drei Aussparungen 68, 70, 72 in dem Dichtungselement 42, und man erkennt eine zentrale Aussparung 74, welche im Wesentlichen der Kontur der Kammer 38 angepasst ist. Das Dichtungselement 42 weist jedoch einen Blockierabschnitt 76 auf, mit welchem dieses über eine mit Strichlinie angedeutete Grundumfangskontur hervorsteht. Diese Grundumfangskontur wäre beispielsweise für ein Dichtungselement 42 vorgesehen, das an keiner Stelle über die einander unmittelbar gegenüberliegenden und gegeneinander abzudichtenden Oberflächen der beiden Gehäuseabschnitte 40, 56 hervorsteht. Mit diesem in Fig. 2 erkennbaren Blockierabschnitt 76 erstreckt sich jedoch das Dichtungselement 42 in den Bereich der Kammer 38 bzw. auch bis in den Durchtrittsbereich 54. Dies ist in Fig. 3 veranschaulicht, wo dieser bis in den Durchtrittsbereich 54 ragende und somit den Ringkanal 50 teilweise überdeckende Blockierabschnitt 76 mit feiner Schraffur eingezeichnet ist.

Diese Ausgestaltung des Dichtungselements 42 hat zur Folge, dass abweichend von der grundsätzlich vorgesehenen ringartigen Geometrie des Durchtrittsbereichs 54 für die Verbrennungsluft ein durch die Größe des Blockierabschnitts 76 definierter Ringsektor dieses Durchtrittsbereichs 54 gegen Durchströmung blockiert ist. Das heißt, die vom Seitenkanalgebläse 26 in die Kammer 38 geförderte Luft kann nicht über den gesamten ringartigen Durchtrittsbereich 54 in den Ringkanal 50 eintreten, sondern nur in einem beschränkten Umfangsbereich. Dies hat selbstverständlich eine Auswirkung darauf, in welchen Umfangsbereichen diese Verbrennungsluft verstärkt über die Öffnungen 52 in die Brennkammer 16 einströmen wird. Damit wird ein deutlicher Einfluss auf die Charakteristik der in der Brennkammer 16 ablaufenden Verbrennung genommen, da ein wesentlicher Einflussparameter hierfür die Verteilung der zur Verbrennung zur Verfügung stehende Luft und die Durchmischung derselben mit dem aus der Bodenverdampferbaugruppe 18 abgedampften Brennstoff ist. Weiter kann durch das Vorsehen dieses Blockierabschnitts 76 Einfluss auch auf die Strömungsverhältnisse innerhalb der Kammer 38 genommen werden, so dass durch diese definierte Beeinflussung nicht nur eine Auswirkung auf die Verbrennungscharakteristik generiert wird, sondern auch das akustische Verhalten des Fahrzeugheizgeräts 10 beeinflusst werden kann.

Es ist selbstverständlich, dass der in Fig. 2 und in Fig. 3 erkennbare Blockierabschnitt 76 nur ein Beispiel repräsentiert. So ist es selbstverständlich möglich, auch im Bereich der Aussparungen 68, 70, 72 entsprechende Blockierabschnitte vorzusehen, so dass zumindest eine dieser Öffnungen ganz oder teilweise gegen den Durchtritt von Verbrennungsabgasen blockiert ist. Auch in Zuordnung zum Durchtrittsbereich 54 für die Verbrennungsluft ist es möglich, mehrere in Umfangsrichtung verteilt liegende Blockierabschnitte vorzusehen, um damit mehrere Umfangsbereiche des Durchtrittsbereichs 54 gegen den Durchtritt zu blockieren oder zumindest teilweise zu blockieren. Die Auswahl der Anzahl und der Lage derartiger Blockierabschnitte kann in Abhängigkeit der baulichen Gegebenheiten erfolgen, so dass durch die Beeinflussung der Strömungsverhältnisse beispielsweise bei Zusammengliederung verschiedener Baugruppen zum Erhalt verschiedener Fahrzeugheizgerätetypen näherungsweise gleichbleibende Betriebscharakteristiken erhalten werden können. Da diese Beeinflussung der Strömungsverhältnisse sehr nahe an denjenigen Bereichen erfolgt, in welchen einerseits die Verbrennung läuft und andererseits die Geräuschquellen liegen, wird es möglich, durch bereits geringe Veränderung bzw. Beeinflussung der Strömungsverhältnisse relativ starke Auswirkungen bei der Verbrennungscharakteristik und bei der Geräuschentstehung zu bewirken. Weiterhin wird es möglich, bei jedem Heizgerätetyp durch die Beeinflussung der Strömungsverhältnisse eine Optimierung der Verbrennung innerhalb der Brennkammer 16 zu erlangen, um einerseits eine höchstmögliche Effizienz zu erhalten und andererseits dafür zu sorgen, dass eine Minimierung der bei der Verbrennung entstehenden Schadstoffe und Ablagerungen erhalten werden kann.

## Patentansprüche

1. Fahrzeugheizgerät, umfassend einen Brennkammerbereich (12), einen von einem Gebläsebereich (24) zu dem Brennkammerbereich (12) führenden Verbrennungsluft-Strömungsweg und einen von dem Brennkammerbereich (12) zu einem Abgasauslass (64) führenden Abgasströmungsweg, wobei Teile des Verbrennungsluft-Strömungswegs oder/und des Abgas-Strömungswegs in verschiedenen Gehäuseabschnitten (40, 56) gebildet sind und im Angrenzungsbereich dieser Gehäuseabschnitte (40, 56) Durchtrittsbereiche (54, 66) für Verbrennungsluft bzw. Abgase vorgesehen sind, ferner umfassend wenigstens ein zwischen den Gehäuseabschnitten (40, 56) angeordnetes Dichtungselement (42),
**dadurch gekennzeichnet dass** das wenigstens eine Dichtungselement (42) wenigstens einen Durchtrittsbereich (54, 66) teilweise gegen Durchströmung blockiert.

2. Fahrzeugheizgerät nach Anspruch 1,
**dadurch gekennzeichnet, dass** ein Verbrennungsluft-Durchtrittsbereich (54) im Wesentlichen ringartig ausgebildet ist und dass das wenigstens eine Dichtungselement (42) wenigstens einen Ringabschnitt des Verbrennungsluft-Durchtrittsbereichs (54) wenigstens teilweise blockiert.

3. Fahrzeugheizgerät nach Anspruch 1 oder 2,
**dadurch gekennzeichnet, dass** ein Abgas-Durchtrittsbereich (66) eine Mehrzahl von Durchtrittsöffnungen (58, 60, 62) umfasst und dass das wenigstens eine Dichtungselement (42) wenigstens eine der Durchtrittsöffnungen (58, 60, 62) wenigstens teilweise blockiert.

4. Fahrzeugheizgerät nach einem der Ansprüche 1 bis 3,
**dadurch gekennzeichnet, dass** ein Dichtungselement (42) zwischen den Gehäuseabschnitten (40, 56) angeordnet ist und dass das eine Dichtungselement (42) einen Verbrennungsluft-Durchtrittsbereich (54) oder/und einen Abgas-Durchtrittsbereich (66) teilweise blockiert.

5. Fahrzeugheizgerät nach einem der Ansprüche 1 bis 4,
**dadurch gekennzeichnet, dass** der Verbrennungsluft-Strömungsweg in einem ersten Gehäuseabschnitt (40) eine Verbrennungsluft von einem Verbrennungsluftgebläse (26) aufnehmende Kammer (38) umfasst und in einem zweiten Gehäuseabschnitt (56) einen zwischen einem Brennkammergehäuse (14) und einer diese umgebenden Wandung (48) gebildeten Ringkanal (50) umfasst und dass ein Verbrennungsluft-Durchtrittsbereich (54) im Angrenzungsbereich der Kammer (38) an den Ringkanal (50) gebildet ist.

6. Fahrzeugheizgerät nach Anspruch 5,
**dadurch gekennzeichnet, dass** der Abgas-Strömungsweg in dem zweiten Gehäuseabschnitt (56) einen zwischen einem Flammrohr (20) und einem Wärmetauschergehäuse (22) gebildeten Ringraum (46) umfasst, der in einem Endbereich durch eine Wandung (44) begrenzt ist, in welcher wenigstens eine Durchtrittsöffnung (58, 60, 62) vorgesehen ist, und dass in dem ersten Gehäuseabschitt (40) eine an die Wandung (44) angrenzende, ringabschnittartig ausgebildete Aufnahmekammer (61) vorgesehen ist, wobei der Abgas-Durchlassbereich (66) im Übergang von dem Ringraum (46) zu der Aufnahmekammer (61) die wenigstens eine Durchtrittsöffnung (50, 60, 62) umfasst.

## Claims

1. Vehicle heating device, comprising a combustion chamber area (12), a combustion air flow path leading from a compressor area (24) to the combustion chamber area (12) and an exhaust gas flow path leading from the combustion chamber area (12) to an exhaust outlet (64), wherein parts of the combustion air flow path and/or the exhaust gas flow path are formed in different housing sections (40, 56), and in the boundary area of these housing sections (40, 56) passage areas (54, 66) are provided for combustion air or exhaust gases, also comprising at least one sealing element (42) arranged between the housing sections (40, 56), **characterised in that** at least one sealing element (42) partly blocks at least one passage area (54, 66) against throughflow.

2. Vehicle heating device according to claim 1, **characterised in that** a combustion air passage area (54) is designed to be essentially annular, and **in that** the at least one sealing element (42) at least partly blocks at least one annular section of the combustion air passage area (54).

3. Vehicle heating device according to claim 1 or 2, **characterised in that** an exhaust passage area (66) comprises a plurality of through openings (58, 60, 62), and **in that** the at least one sealing element (42) at least partly blocks at least one of the passage openings (58, 60, 62).

4. Vehicle heating device according to one of claims 1 to 3, **characterised in that** a sealing element (42) is arranged between the housing sections (40, 56), and **in that** one sealing element (42) partly blocks a combustion air passage area (54) and/or an exhaust gas passage area (66).

5. Vehicle heating device according to one of claims 1 to 4, **characterised in that** the combustion air flow path in a first housing section (40) comprises a chamber (38) receiving combustion air from a combustion air compressor (26) and in a second housing section (56) comprises an annular channel (50) formed between a combustion chamber housing (14) and a wall surrounding the latter, and **in that** a combustion air passage area (54) is formed in the adjoining area of the chamber (38) on the annular channel (50).

6. Vehicle heating device according to claim 5, **characterised in that** the exhaust gas flow path in the second housing section (56) comprises an annular chamber (46) formed between a flame pipe (20) and a heat exchanger housing (22), which is delimited in an end area by a wall (44), in which at least one through opening (58, 60, 62) is provided, and **in that** in the first housing section (40) a receiving chamber (61) is provided which is designed in the form of ring sections and adjoins the wall (44), wherein the exhaust gas passage area (66) in the transition from the annular chamber (46) to the receiving chamber (61) comprises the at least one passage opening (50, 60, 62).

## Revendications

1. Appareil de chauffage pour véhicule, comprenant une zone formant chambre de combustion (12), un trajet d'écoulement d'air de combustion qui mène d'une zone de soufflage (24) jusqu'à la zone de la chambre de combustion (12), et un trajet d'écoulement de gaz d'échappement qui mène de la zone de la chambre de combustion (12) jusqu'à une sortie de gaz d'échappement (64), dans lequel des parties du trajet d'écoulement d'air de combustion et/ou du trajet d'écoulement de gaz d'échappement sont formées dans différents tronçons d'un boîtier (40, 56) et dans la zone limitrophe de ces tronçons de boîtier (40, 56) sont prévues des zones de traversée (54, 66) pour l'air de combustion ou respectivement pour les gaz d'échappement, et comprenant en outre au moins un élément d'étanchéité (42) agencé entre les tronçons de boîtier (40, 56),
**caractérisé en ce que** ledit au moins un élément d'étanchéité (42) bloque au moins une zone de traversée (54, 66) partiellement à l'encontre d'un écoulement traversant.

2. Appareil de chauffage pour véhicule, selon la revendication 1,
**caractérisé en ce qu'**une zone de traversée d'air de combustion (54) est réalisée essentiellement sous forme annulaire, et **en ce que** ledit au moins un élément d'étanchéité (42) bloque au moins partiellement au moins un tronçon annulaire de la zone de traversée d'air de combustion (54).

3. Appareil de chauffage pour véhicule selon la revendication 1 ou 2,
**caractérisé en ce qu'**une zone de traversée de gaz d'échappement (66) comprend une pluralité d'ouvertures traversantes (58, 60, 62), et **en ce que** ledit au moins un élément d'étanchéité (42) bloque au moins partiellement l'une au moins des ouvertures traversantes (58, 60, 62).

4. Appareil de chauffage pour véhicule selon l'une des revendications 1 à 3,
**caractérisé en ce qu'**un élément d'étanchéité (42) est agencé entre les tronçons de boîtier (40, 56), et **en ce que** ledit élément d'étanchéité (42) bloque partiellement une zone de traversée d'air de combustion (54) et/ou une zone de traversée de gaz échappement (66).

5. Appareil de chauffage pour véhicule selon l'une des revendications 1 à 4,
**caractérisé en ce que** le trajet d'écoulement d'air de combustion comprend, dans un premier tronçon de boîtier (40), une chambre (38) qui reçoit de l'air de combustion depuis un ventilateur d'air de combustion (26), et comprend, dans un deuxième tronçon de boîtier (56), un canal annulaire (50) formé entre un boîtier de chambre à combustion (14) et une paroi (48) qui entoure celui-ci, et **en ce qu'**une zone de traversée d'air de combustion (54) est formée dans la zone adjacente de la chambre (38) contre le canal annulaire (50).

6. Appareil de chauffage pour véhicule selon la revendication 5,
**caractérisé en ce que** le trajet d'écoulement de gaz d'échappement comprend, dans le deuxième tronçon de boîtier (56), un espace annulaire (46) formé entre un tube à flammes (20) et un boîtier échangeur de chaleur (22), ledit espace annulaire étant limité dans une zone terminale par une paroi (44) dans laquelle est prévue au moins une ouverture traversante (58, 60, 62), et **en ce qu'**il est prévu dans le deuxième tronçon de boîtier (40) une chambre de réception (61) limitrophe à la paroi (44) et réalisée à la manière d'un tronçon annulaire, et dans lequel la zone de traversée de gaz d'échappement (66) comprend ladite au moins une ouverture traversante (58, 60, 62) dans la transition de la chambre annulaire (46) à la chambre de réception (61).
